# EUROPEAN PATENT SPECIFICATION

(11) **EP 3 774 395 B1**
(45) Date of publication and mention of the grant of the patent: **23.02.2022**
(21) Application number: 19724927.9
(22) Date of filing: 12.04.2019
(51) Int. Cl.: B60C 11/00

(54) **PNEUMATIC TYRE FOR ROAD VEHICLES**
LUFTREIFEN FÜR STRASSENFAHRZEUGE
PNEUMATIQUE POUR VÉHICULES ROUTIERS

(30) Priority: 13.04.2018 IT 201800004507
(43) Date of publication of application: 17.02.2021
(73) Proprietor: Bridgestone Europe NV/SA, 1932 Zaventem (BE)
(72) Inventor: AGORETTI, Pasquale, 00128 Roma (IT); D'ALFONSO, Claudio, 00128 Roma (IT)
(74) Representative: Marchetti, Alessio
(86) International application number: PCT/IB2019/053036
(87) International publication number: WO 2019/198048

(56) References cited:
- EP-A1- 2 990 223
- JP-A- S61 229 602
- JP-A- 2001 088 513
- JP-A- 2002 205 513
- JP-B2- 3 273 981

## Description

The present invention relates to a pneumatic tyre for road vehicles.

In particular, the present invention relates to a radial pneumatic tyre for road vehicles, comprising a tread consisting of an outer portion made with a compound with relatively high hysteresis loss, and an inner portion made with a compound with relatively low hysteresis loss and having a connection interface with the outer portion having a special geometry.

In the field of pneumatic tyres for road vehicles, it is known that a low rolling resistance and a good wear resistance on the one hand and good road holding and braking ability in the dry or wet on the other hand are characteristics that are difficult to obtain with the same pneumatic tyre. In fact, whilst in order to confer good rolling resistance and good wear resistance to a pneumatic tyre, treads made with compounds with low hysteresis loss are used, in order to confer good road holding and braking ability to a pneumatic tyre, treads with compounds with relatively higher hysteresis loss become necessary.

Consequently, an optimal tread compound for simultaneously enhancing all of the dynamic responses of the tread of a pneumatic tyre should exhibit opposing hysteresis characteristics, at least over certain required performance limits.

In EP-0 864 446 and EP-0 864 447 pneumatic tyres of the previously defined type are described that are provided with treads made using two compounds, one with a low hysteresis loss and the other with a high hysteresis loss, in order to form two or more axially adjacent annular tread strips. In each pair of axially contiguous strips, one is made using one of the two compounds and the other is made using the other of the two compounds.

Other relevant prior art is known from EP 2 990 223 A1, JP 3 273981 B2, JP 2002 205513 A, JP S61 229602 A and JP 2001 088513 A.

The known multi-compound treads obtained by axially distributing the various strips as a function of the dynamic characteristics to be enhanced, through capable of ensuring the required performance during the first use thereof, are however subject to non-uniform wear with the result that, after a short period of time, the compromise that was so difficult to achieve, is lost.

A further solution that has been adopted concerns the implementation of a tread composed of an outer layer made with a compound with relatively high hysteresis loss, and an inner layer made with a compound with relatively low hysteresis loss. The two layers are radially adjacent to one another and have a substantially planar connection interface surface, i.e., such to avoid any interpenetration of one layer within the other.

Notwithstanding such a solution having provided obvious improvements in terms of rolling resistance, without leading to any deterioration in braking performance, the need was however felt to provide pneumatic tyres that also result in obvious improvements in terms of braking. In fact, such a solution makes it possible to improve the balance of the required performance but nonetheless to a limited extent, since the overall performance is a compromise resulting from the contribution of the two components.

The inventors of the present invention have found that by implementing a particular connection surface between the two layers with different hysteresis losses, it is possible to obtain surprising advantages in terms of braking, while maintaining unaltered the advantages obtained in terms of rolling resistance.

The object of the present invention is a pneumatic tyre for road vehicles comprising a tread portion comprising an outer layer made with a compound A having a dynamic modulus at 30 °C of between 5 and 10 MPa and a tanδ at 60 °C of between 0.400 and 0.100, and an inner layer made with a compound B having a dynamic modulus at 30 °C that is lower than that of said compound A of a value of between 0.5 to 10 MPa and a tanδ at 60 °C that is lower than that of said compound A of value of between 0.01 and 0.20; said outer layer and said inner layer being in contact with each other by means of a connection surface; said pneumatic tyre being characterized in that said connection surface has a corrugated conformation that is such to provide an alternated plurality of interpenetrating longitudinal portions; each of said interpenetrating portions extending parallel to an axis of rotation X of the pneumatic tyre.

The dynamic properties were measured in accordance with the ISO 4664 standard. As is known to a technician in the field, the values of tanδ at 60 °C are strictly correlated to the rolling resistance: the lower the tanδ value at 60 °C, the better the rolling resistance.

Here and hereinafter interpenetrating portion refers to a portion of one of the two (inner or outer) layers of the tread that is found to be axially flanked by two portions of the other (outer or inner) layer of the tread. Preferably, said connection surface implements a regular continuity of interpenetrating portions, all of equal size and parallel to one another. In this way, said tread portion comprises an outer portion made only from compound A, a central portion made from the alternation of interpenetrating portions, and an inner portion made only from compound B.

Preferably, the ratio between the thickness of said outer portion and the thickness of said inner portion is between 0.1 and 0.9.

Preferably, the ratio between said central portion and the overall thickness of the tread portion is between 0.2 and 0.8.

The invention will now be described with reference to the accompanying figure, which illustrates, by means of a cross-section enlargement, a portion of a preferred embodiment of the pneumatic tyre according to the present invention.

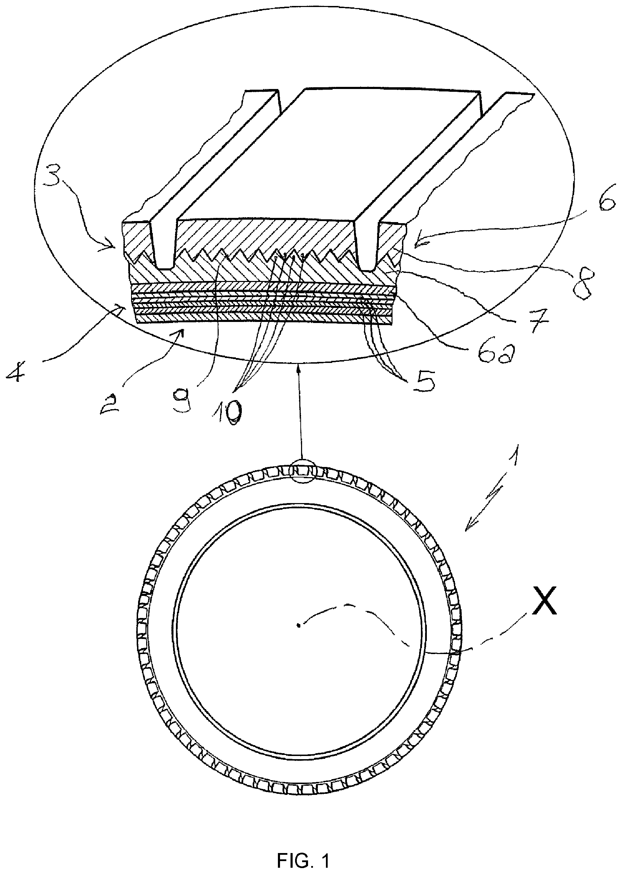

With reference to figure 1, the numeral 1 indicates a radial pneumatic tyre comprising an inner radial carcass 2 and an outer tread 3 separated from one another by a tread belt 4 defined by a pack of tread plies 5 overlapping one another.

In the example illustrated, the tread 3 comprises a tread band 6 and a cushion 6a overlapping one another. The tread band 6 comprises an inner layer 7 and an outer layer 8.

The inner layer 7 is made with a compound B with relatively low hysteresis loss, whilst the outer layer 8 is made with a compound A with relatively high hysteresis loss.

The inner layer 7 and the outer layer 8 are in contact to one another by means of a connection surface 9. The connection surface 9 has a corrugated conformation that is such to provide an alternation of interpenetrating longitudinal portions 10 between the two layers 7 and 8. The interpenetrating portions 10 extend parallel to an axis of rotation X of the pneumatic tyre.

According to the preferred embodiment shown in the figure, the interpenetrating portions 10 are parallel to one another, all having the same height h.

In this way, the tread band 6 comprises an outer portion of height S made only from compound A, a central portion of height h made from the alternation of interpenetrating portions 10, and an inner portion of height Y made only from compound B.

In order to verify the advantages deriving from the solution of the present invention, five specimens were made, all having the same thickness equal to 8 mm. The five specimens, made as described below, were subjected to evaluations in terms of braking and rolling resistance.

A first specimen (I) was made entirely with compound A, a second specimen (II) was made entirely with compound B, a third specimen (III) was made with a 6 mm layer of compound B and a 2 mm layer of compound A and a fourth specimen (IV) was made with a 7 mm layer of compound B and a 1 mm layer of compound A. The fifth specimen (V), which represents the solution of the invention, comprises two layers made respectively with compounds A and B, which implement a relative plurality of interpenetration portions within the interface. In particular, the connection surface between the layers has a corrugated conformation that is such to implement the longitudinal interpenetration portions. The interpenetration portions have a height equal to 2 mm. In this way the fifth specimen will consist of a 5 mm portion filled with compound B, a 1 mm portion filled with compound A and an intermediate 2 mm portion, wherein the compounds A and B interpenetrate in an alternating manner.

In essence, whilst with the third (III) and fourth (IV) specimens the two layers made with compounds A and B respectively have a planar connection surface, in the fifth specimen (V) the two layers made with compounds A and B respectively have a corrugated connection surface that is such to provide a plurality of alternated interpenetrating longitudinal portions, so that the total volume of the two components is the same in relation to that of specimen III.

Table I shows the compositions of the compounds A and B used in the specimens.

**TABLE I**

| | | | COMPOUND A | COMPOUND B |
|---|---|---|---|---|
| POLYMERIC BASE WITH OIL | | E-SBR | 72.9 | 72.9 |
| | | S-SBR | 56.4 | 56.4 |
| FILLER | | SILICA | 70.0 | 40.0 |
| | | CARBON BLACK | 10.0 | 20.0 |
| BINDER AGENT | | SILANE | 7.0 | 4.0 |
| | | MICROCRYSTALLINE WAX | 1.0 | 1.0 |
| | | STEARIC ACID | 1.0 | 1.0 |
| | | AROMATIC OIL | 9.0 | 4.0 |
| | | ZINC OXIDE | 2.0 | 2.0 |
| | | SULFUR | 2.0 | 2.0 |
| VULCANIZING AGENTS | ACCELERATOR | TBBS | 1.0 | 1.2 |
| | ACCELERATOR | MBTS | 0.5 | 0.3 |
| | ACCELERATOR | DPG | 1.5 | 1.1 |
| | ANTIOXIDANT | 6PPD | 1.5 | 1.5 |
| | | DRY POLYMERIC BASE | 100 | 100 |

E-SBR is a polymeric base obtained by means of an emulsion polymerization process with an average molecular weight of between 800-1500×10³ and 500-900×10³, respectively, with a styrene content of between 20 and 45% and used with an oil content of between 0 and 30%;
S-SBR is a polymeric base obtained by means of a solution polymerization process with an average molecular weight of between 800-1500×10³ and 500-900×10³, respectively, with a styrene content of between 20 and 45%.

The silica used is marketed under the name ULTRASIL VN3 by the DEGUSSA company.

The carbon black used is marketed under the name Vulcan 7H (N234) by the CABOT company.

The silane used is marketed under the name SI 69 by the DEGUSSA company.

TBBS is the acronym for the compound N-tert-butyl-2-benzotiazilsulfenammide; MBTS is the acronym for the compound mercapto benzothiazole disulfide; DPG is the acronym for the compound diphenyl guanidine; 6PPD is the acronym for N-1,3-dimethylbutyl-N'-phenyl-para-phenylenediamine.

The compounds A and B described above have a dynamic modulus at 30 °C of 10 and 8 MPa, respectively, and a tanδ at 60 °C of 0.200 and 0.170, respectively.

The five specimens above were subjected to testing according to the ISO 4664 standard in order to evaluate the dynamic properties.

The braking performance was evaluated by comparing the coefficient of friction of the compounds, obtained with a linear friction meter at a speed of 500 mm/s, at a temperature of 5 °C under wet conditions. The results were obtained by comparing the respective coefficients of friction: the higher the index, the higher the coefficient of friction and, therefore, the wet grip.

In particular, the performance in terms of rolling resistance was correlated to the values of tanδ at 60 °C.

Table II shows the values of braking and rolling resistance indexed to the values of the first specimen (I).

**TABLE II**

| | | | | | |
|---|---|---|---|---|---|
| Specimens | I | II | III | IX | V |
| Braking | 100 | 90 | 95 | 90 | 120 |
| Rolling resistance | 100 | 110 | 105 | 108 | 105 |

As is evident from the data of Table III, the conformation of the contact surface of the two layers in specimen V confers a clear improvement in terms of braking compared to specimens III and IV. Specimens III and IV, despite comprising the combination of the two layers with different hysteresis losses, nonetheless fail to achieve the advantages in terms of braking achieved by the solution of the present invention (specimen V).

In other words, the present invention, starting from a known tread conformation comprising an inner layer made with a compound with relatively low hysteresis loss and an outer layer made with a compound with relatively high hysteresis loss, can, by virtue of the presence of the interpenetrating portions of the two layers, greatly boost performance in terms of braking, maintaining, at the same time, the advantages obtained in terms of rolling resistance.

## Claims

1. Pneumatic tyre (1) for road vehicles comprising a tread portion (6) comprising an outer layer (8) made with a compound A having a dynamic modulus at 30 °C of between 5 and 15 MPa and a tanδ at 60 °C of between 0.400 and 0.100, and an inner layer made with a compound B having a dynamic modulus at 30 °C that is lower than that of said compound A of a value of between 0.5 and 10 MPa and a tanδ at 60 °C that is lower than that of said compound A of value of between 0.01 and 0.20, wherein the dynamic modulus and the **tanδ** of compounds A and B are measured in accordance with the ISO 4664 standard; said outer layer (8) and said inner layer (7) being in contact with each other by means of a connection surface (9); said pneumatic tyre being **characterized in that** said connection surface (9) has a corrugated conformation that is such to provide an alternated plurality of interpenetrating longitudinal portions (10); each of said interpenetrating portions (10) extending parallel to an axis of rotation X of the pneumatic tyre.

2. Pneumatic tyre for road vehicles according to claim 1, **characterized in that** said connection surface (9) implements a regular continuity of interpenetrating portions (10) all of equal size and parallel to one another; said tread portion (6) comprising an outer portion made only from compound A, a central portion made from the alternation of interpenetrating portions (10), and an inner portion made only from compound B.

3. Pneumatic tyre for road vehicles according to claim 2, **characterized in that** the ratio between the thickness of said outer portion and the thickness of said inner portion is between 0.1 and 0.9.

4. Pneumatic tyre for road vehicles according to claim 2, **characterized in that** the ratio between said central portion and the overall thickness of the tread portion is between 0.2 and 0.8.

## Patentansprüche

1. Luftreifen (1) für Straßenfahrzeuge, umfassend einen Laufflächenabschnitt (6), umfassend eine äußere Schicht (8), die aus einer Mischung A mit einem dynamischen Modul bei 30 °C zwischen 5 und 15 MPa und einem tanδ bei 60 °C zwischen 0,400 und 0,100 hergestellt ist, und eine innere Schicht, die aus einer Mischung B mit einem dynamischen Modul bei 30 °C, der niedriger ist als der von Mischung A, mit einem Wert zwischen 0,5 und 10 MPa und einem tanδ bei 60 °C, der niedriger ist als der von Mischung A, mit einem Wert zwischen 0,01 und 0,20 hergestellt ist, wobei der dynamische Modul und tanδ der Mischungen A und B gemäß der Norm ISO 4664 gemessen werden; wobei die äußere Schicht (8) und die innere Schicht (7) mittels einer Verbindungsfläche (9) miteinander in Kontakt stehen; wobei der Luftreifen **dadurch gekennzeichnet ist, dass** die Verbindungsfläche (9) eine gewellte Gestalt aufweist, die derart ist, dass sie eine abwechselnde Vielzahl von sich gegenseitig durchdringenden Längsabschnitten (10) bereitstellt; wobei sich jeder der sich gegenseitig durchdringenden Abschnitte (10) parallel zu einer Rotationsachse X des Luftreifens erstreckt.

2. Luftreifen für Straßenfahrzeuge nach Anspruch 1, **dadurch gekennzeichnet, dass** die Verbindungsfläche (9) eine regelmäßige Kontinuität von sich gegenseitig durchdringenden Abschnitten (10) implementiert, die alle gleich groß und parallel zueinander sind; wobei der Laufflächenabschnitt (6) einen äußeren Abschnitt, der nur aus Mischung A hergestellt ist, einen mittleren Abschnitt, der aus der Abwechslung von sich gegenseitig durchdringenden Abschnitten (10) hergestellt ist, und einen inneren Abschnitt, der nur aus Mischung B hergestellt ist, umfasst.

3. Luftreifen für Straßenfahrzeuge nach Anspruch 2, **dadurch gekennzeichnet, dass** das Verhältnis zwischen der Dicke des äußeren Abschnitts und der Dicke des inneren Abschnitts zwischen 0,1 und 0,9 liegt.

4. Luftreifen für Straßenfahrzeuge nach Anspruch 2, **dadurch gekennzeichnet, dass** das Verhältnis zwischen dem zentralen Abschnitt und der Gesamtdicke des Laufflächenabschnitts zwischen 0,2 und 0,8 liegt.

## Revendications

1. Pneumatique (1) pour véhicules routiers comprenant une partie de bande de roulement (6) comprenant une couche externe (8) fabriquée avec un composé A ayant un module dynamique à 30 °C compris entre 5 et 15 MPa et une tanδ à 60 °C comprise entre 0,400 et 0,100, et une couche interne fabriquée avec un composé B ayant un module dynamique à 30 °C qui est inférieur à celui dudit composé A d'une valeur comprise entre 0,5 et 10 MPa et une tanδ à 60 °C qui est inférieure à celle dudit composé A d'une valeur comprise entre 0,01 et 0,20, dans lequel le module dynamique et la tanδ des composés A et B sont mesurés conformément à la norme ISO 4664 ; ladite couche externe (8) et ladite couche interne (7) étant en contact entre elles au moyen d'une surface de raccordement (9) ; ledit pneumatique étant **caractérisé en ce que** ladite surface de raccordement (9) a une conformation ondulée qui est telle qu'elle fournit une pluralité alternée de parties longitudinales interpénétrantes (10) ; chacune desdites parties interpénétrantes (10) s'étendant parallèle à un axe de rotation X du pneumatique.

2. Pneumatique pour véhicules routiers selon la revendication 1, **caractérisé en ce que** ladite surface de raccordement (9) met en oeuvre une continuité régulière de parties interpénétrantes (10) toutes de taille égale et parallèles les unes aux autres ; ladite partie de bande de roulement (6) comprenant une partie externe fabriquée uniquement à partir de composé A, une partie centrale fabriquée à partir de l'alternance de parties interpénétrantes (10), et une partie interne fabriquée uniquement à partir de composé B.

3. Pneumatique pour véhicules routiers selon la revendication 2, **caractérisé en ce que** le rapport entre l'épaisseur de ladite partie externe et l'épaisseur de ladite partie interne est compris entre 0,1 et 0,9.

4. Pneumatique pour véhicules routiers selon la revendication 2, **caractérisé en ce que** le rapport entre ladite partie centrale et l'épaisseur globale de la partie de bande de roulement est compris entre 0,2 et 0,8.
